# FASCICULE DE BREVET EUROPEEN

(11) **EP 0 470 243 B1**
(45) Date de publication et mention de la délivrance du brevet: **01.09.1993**
(21) Numéro de dépôt: 91906314.9
(22) Date de dépôt: 26.02.1991
(51) Int. Cl.: B65D 90/48, A01D 87/10

(54) **DISPOSITIF PERMETTANT DE DETECTER LE REMPLISSAGE D'UN RECEPTACLE LORS D'UNE OPERATION DE TRANSFERT DE MATIERE DEPUIS UNE ZONE DE STOCKAGE JUSQU'AUDIT RECEPTACLE**
EINRICHTUNG ZUR ERFASSUNG DER FÜLLUNG EINES BEHÄLTERS WÄHREND DES ZUFÜHRENS VON MATERIAL AUS EINER SPEICHERZONE ZU DIESEM BEHÄLTER
DEVICE FOR DETECTING THE FILLING OF A RECEPTACLE DURING THE TRANSFER OF MATTER THERETO FROM A STORAGE AREA

(30) Priorité: 27.02.1990 FR 9002696
(43) Date de publication de la demande: 12.02.1992
(73) Titulaire: CREATIONS DELERY, F-01600 Trevoux (FR); S.A. KUBOTA EUROPE, F-95100 Argenteuil (FR)
(72) Inventeur: HARRIS, Alistair, F-69100 Villeurbanne (FR)
(74) Mandataire: Laurent, Michel
(86) Numéro de dépôt international: FR9100155
(87) Numéro de publication internationale: WO9113008

(56) Documents cités:
- WO-A-87/04995
- US-A- 4 172 515
- US-I- T 988 005

## Description

La présente invention concerne un dispositif permettant de détecter automatiquement le remplissage d'un réceptacle (ou enceinte) dans une installation dans laquelle le transfert de matière, depuis une zone de stockage jusqu'audit réceptacle, est réalisé au moyen d'un ensemble comprenant une turbine permettant de prélever ladite matière sur la zone de stockage, et de la transférer dans le réceptacle (ou enceinte) par soufflage (aspiration et/ou propulsion) à l'intérieur d'un conduit reliant la sortie de ladite turbine à la partie supérieure de l'enceinte de récupération. Un tel dispositif est connu du document US-I-T 988 005.

Dans de nombreux domaines, on se trouve confronté au problème d'avoir à prélever une matière depuis une zone de stockage pour la transférer à l'intérieur d'un réceptacle ou enceinte en vue de transporter ladite matière dans une autre zone.

Un tel problème se pose notamment dans le domaine agricole pour le stockage des grains, de la farine, le ramassage de la paille après les moissons et le ramassage de l'herbe après une tonte.

En général, pour effectuer un tel transfert, on utilise un système aspirant comprenant une turbine qui prélève la matière de la zone de stockage et la transfère à l'intérieur d'un réceptacle approprié par l'intermédiaire d'un conduit de liaison reliant la sortie de ladite turbine à la partie supérieure du réceptacle.

De tels ensembles sont notamment utilisés sur des engins permettant de ramasser l'herbe après une tonte. L'invention sera décrite plus particulièrement pour une telle application, mais il est évident que cela n'est pas limitatif et qu'un système de détection de remplissage du même type pourrait être utilisé dans d'autres domaines où se posent des problèmes similaires.

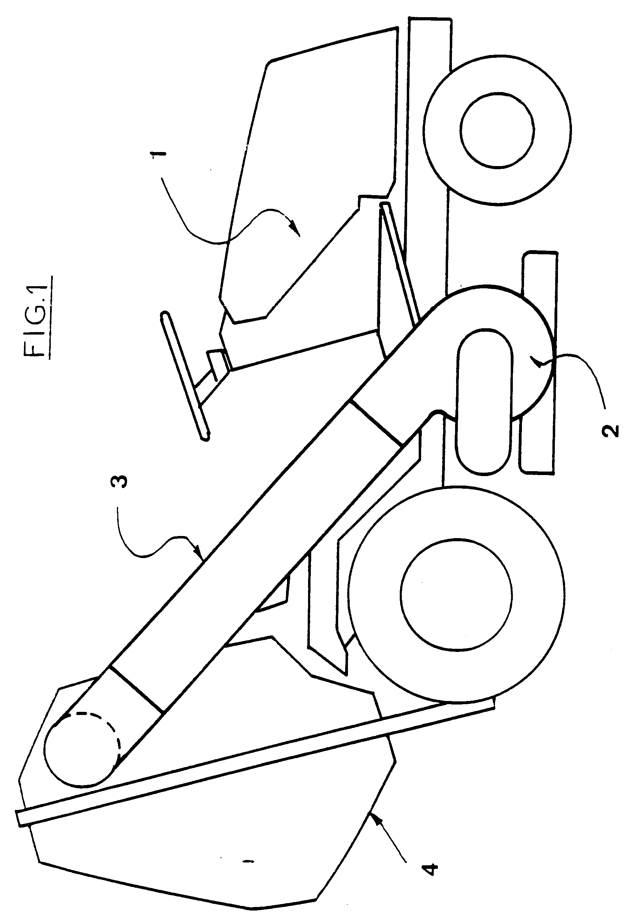

Ainsi que cela ressort de la figure 1 annexée, les engins permettant de ramasser l'herbe après une tonte, sont constitués en général par un véhicule (1), sur lequel est monté un ensemble permettant d'assurer le ramassage et le stockage de l'herbe. Un tel ensemble est constitué essentiellement d'une tête (2) déplaçable à proximité de la surface du sol, et qui comporte une turbine permettant de prélever l'herbe sur le sol et de la transférer au moyen d'un conduit de raccordement (3) à une enceinte de stockage (4) disposée à l'arrière du véhicule.

L'un des problèmes qui se posent dans de tels engins est celui de la détection du remplissage de l'enceinte de stockage. A ce jour, les solutions proposées pour signaler ce remplissage font essentiellement appel à des ensembles permettant de contrôler de manière visuelle le niveau d'herbe à l'intérieur du bac de stockage. De tels moyens manquent de précision, demandent une surveillance de la part de l'opérateur, et surtout ne permettent pas de détecter si un bourrage se produit dans le conduit de raccordement, bourrage susceptible d'entraîner un refoulement de la matière à l'intérieur de la turbine de prélèvement et, par suite, une détérioration du matériel.

Or on a trouvé, et c'est ce qui fait l'objet de la présente invention, un dispositif de conception simple qui, non seulement, permet de détecter avec précision le niveau de remplissage de l'enceinte et d'en informer immédiatement l'opérateur au moyen d'un système d'alarme (sonore et/ou visuel), mais également signale automatiquement tout bourrage accidentel à l'intérieur du tuyau d'alimentation, et permet donc d'assurer une sécurité totale par le fait que l'opérateur peut immédiatement arrêter le processus de remplissage et éventuellement stopper l'engin lui-même, bien que cela ne soit pas indispensable.

D'une manière générale, le dispositif conforme à l'invention se présente sous la forme d'un bloc (ou boitier) adaptable sur une paroi du circuit de transfert de la matière entre la sortie de la turbine et le réceptacle ou enceinte de stockage et ce, au dessus d'une fenêtre ou ouverture réalisée sur ledit circuit, ledit bloc comprenant d'une part une chambre ouverte vers l'extérieur servant de cage à un volet obturateur flexible maintenu normalement plaqué contre la fenêtre ou ouverture réalisée dans le circuit de transfert et ce, de manière à l'obturer, en formant une surface complémentaire de la surface interne du conduit de transfert et sans aucune protubérance à l'intérieur dudit conduit, ledit volet étant monté à l'intérieur de la chambre, de manière à pouvoir d'une part, fléchir à l'intérieur de ladite chambre lors des variations normales du flux d'air et de matière avec un minimum de fuites d'air vers l'extérieur et, d'autre part, lors d'une surpression permanente à l'intérieur du conduit de transmission (produite par un bourrage accidentel ou un remplissage de l'enceinte de stockage), à pivoter automatiquement en s'écartant de la fenêtre et, lors de ce déplacement, à provoquer le déclenchement d'une alarme sonore ou visuelle, intégrée dans une chambre étanche formant partie intégrante dudit boitier.

Selon une forme préférentielle de réalisation selon l'invention, le volet obturateur flexible est à base d'un matériau imputrescible, résistant aux chocs, et est constitué par exemple par une lame ou plaquette à base d'un élastomère, tel que celui commercialisé sous la marque "HYTREL" par la Société DU PONT DE NEMOURS. Bien entendu, tout autre type de matière présentant des caractéristiques de,flexibilité et d'absorption des chocs, pourrait être utilisé.

Ladite plaquette souple, flexible, présente une surface inférieure correspondant à la surface interne du conduit, cette surface étant cependant avantageusement plane et le dispositif conforme à l'invention étant disposé dans une zone du conduit de liaison, dont la section est telle que la surface interne est également plane.

Cette lame flexible et la fenêtre correspondante pratiquée dans le circuit de liaison, ont des formes correspondantes, la lame étant fixée au boitier le long de l'une de ses extrémités et ses autres bords libres venant tangenter avec les parois latérales correspondantes de la cage ouverte du boitier, qui se présentent sous la forme d'une surface courbe correspondant à la surface décrite par les bords libres du volet lors de son fléchissement.

Selon une forme de réalisation conforme à l'invention, la lame flexible est de forme trapézoïdale et est fixée au boitier le long de la grande base de ce trapèze, les trois autres bords libres venant tangenter avec les parois latérales de la cage ouverte du boitier dont la paroi frontale (opposée à la ligne de flexion de la lame), se présente sous la forme d'une surface courbe correspondant à la surface décrite par le bord libre du volet lors de son fléchissement.

Les moyens d'alarme associés au dispositif conforme à l'invention sont, selon une forme de réalisation préférentielle, constitués par un système de capteurs magnétiques comprenant un plot magnétique monté à l'extrémité de la lame flexible et un contacteur magnétique disposé à l'intérieur de la chambre étanche, et qui permet de déclencher un système d'alarme (klaxon, voyant..), dont les moyens d'alimentation sont également disposés à l'intérieur de la chambre étanche du boitier. Un tel ensemble autonome, étanche, évite tout raccordement au branchement extérieur, et présente donc une très grande fiabilité, une sécurité d'emploi, et une facilité d'entretien puisqu'il est possible de réaliser sans problème un lavage sous pression.

Par ailleurs, grâce à sa structure, un tel dispositif peut être actionné manuellement, par exemple lorsque l'on souhaite tester son bon fonctionnement. En effet, il est possible de pouvoir déplacer la lame, par exemple en prévoyant à sa surface supérieure une partie en relief permettant de la saisir, de manière à pouvoir amener le plot magnétique monté à l'extrémité de la lame en regard du contacteur disposé à l'intérieur de la chambre étanche, afin de contrôler le bon fonctionnement du sytème d'alarme.

L'invention et les avantages qu'elle apporte seront cependant mieux compris grâce à l'exemple de réalisation concret donné ci-après, à titre indicatif et non limitatif, et qui est illustré par les schémas annexés dans lesquels :
- la figure 1 est, comme dit précédemment, une vue schématique montrant l'ensemble d'une machine conventionnelle permettant le ramassage de l'herbe coupée et son transfert à l'intérieur d'une enceinte de stockage ;
- la figure 2 est une vue en coupe schématique montrant la structure et le fonctionnement d'une telle machine équipée d'un détecteur de remplissage conforme à l'invention ;
- les figures 3, 4 et 5 sont des vues de détail, respectivement en élévation (coupe AA), de dessus et en bout de l'ensemble d'un dispositif détecteur conforme à l'invention.

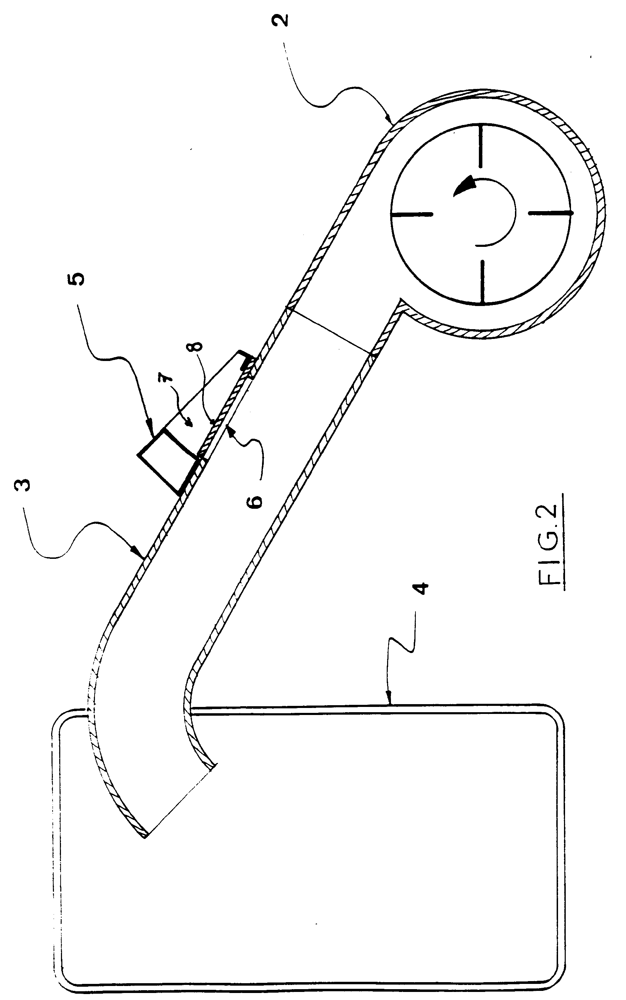

Si l'on se reporte aux figures annexées, et plus particulièrement à la figure 2, le dispositif conforme à l'invention désigné par la référence générale (5), est donc constitué par un ensemble disposé à la sortie de la turbine (2) de prélèvement de matière sur le conduit (3) permettant d'amener ladite matière à l'intérieur de l'enceinte (4) de stockage associée à un véhicule.

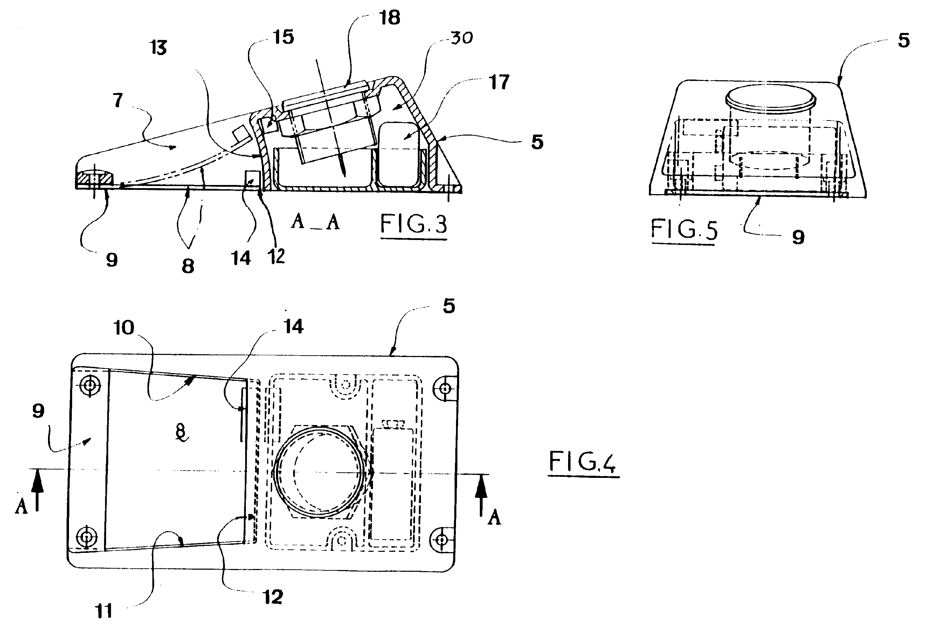

Un tel ensemble (5) dont la structure ressort en détail des figures 3,4 et 5, est constitué essentiellement d'un bloc ou boitier, en une seule pièce, réalisé de préférence par moulage à partir d'une matière plastique. Dans la forme de réalisation préférentielle conforme à l'invention où les moyens d'alarme associés au dispositif, sont constitués par un système de capteurs magnétiques, le matériau choisi à partir de tout matériau perméable au flux magnétique. Ce bloc ou boitier est monté sur le circuit de transfert (3) de la matière (non représenté aux figures 3 à 5) et ce, au dessus d'une fenêtre ou ouverture (6) réalisée sur ce circuit. Selon la forme de réalisation illustrée, cette fenêtre est réalisée dans une zone plane du circuit de transfert, par exemple directement en sortie de la turbine (2) où le conduit d'évacuation a une section de forme carrée. Ce boitier comprend une chambre ouverte (7) vers l'extérieur, qui sert de cage à un volet obturateur flexible (8) maintenu normalement plaqué contre la fenêtre ou ouverture (6) réalisée dans le circuit de transfert et ce, de manière à l'obturer. La surface inférieure de ce volet (8) est lisse et forme une surface complémentaire de la surface interne du conduit de transfert (3), et sans aucune protubérance, dépassant à l'intérieur dudit conduit. Ce volet obturateur (8) est à base d'un matériau imputréscible résistant aux chocs, par exemple à base d'une plaquette en élastomère tel que celui commercialisé sous la marque "HYTREL" par la Société DU PONT DE NEMOURS. Dans l'exemple de réalisation illustré, cette plaquette souple et flexible a une forme trapézoïdale (voir figure 4), et est fixée par sa grande base (9) à l'intérieur de la chambre ouverte (7), les trois autres bords (10,11,12) sont libres et viennent tangenter avec les parois latérales de la cage ouverte (7). La paroi frontale (13) de la cage ouverte du boitier opposée à la ligne de flexion de la lame, se présente sous la forme d'une surface correspondant à la surface décrite par le bord libre (12) du volet lors de son fléchissement. A la figure 3, deux positions dudit volet (8) sont représentées, l'une en fonctionnement normal, l'autre, en pointillés, montrant la position dudit volet lorsque l'alarme doit être déclenchée. Un tel montage du volet (8) à l'intérieur de la chambre (7), permet à ce dernier de pouvoir vibrer à l'intérieur de ladite chambre lors des variations normales du flux d'air et de matière circulant au travers du conduit de transfert (3) et ce, avec un minimum de fuite d'air à l'extérieur. Lors d'une surpression permanente à l'intérieur du conduit de transmission résultant du remplissage de l'enceinte de stockage et/ou d'un bourrage accidentel, le volet (8) peut s'écarter de manière importante de la fenêtre (6) et venir dans la position représentée en pointillés à la figure 3, permettant ainsi un échappement de l'air ainsi que le déclenchement d'une alarme sonore ou visuelle intégrée dans une chambre étanche (30) formant partie intégrante du boitier (5). Dans la forme de réalisation illustrée aux figures 3 à 5, ces moyens d'alarme sont constitués par un système de capteurs à induction, comprenant un plot magnétique (14) fixé à proximité du bord extrême (12) de la lame flexible (8), et un contacteur magnétique (15) disposé, quant à lui, à l'intérieur de la chambre étanche (30) de l'autre côté de la paroi (13) contre laquelle s'appuie l'extrémité de la lame flexible (8) lors de ses déplacements. A l'intérieur de la chambre étanche (30), sont également disposés des moyens d'alimentation (batterie) (17) du système d'alarme (18) formé, par exemple par un klaxon. Un tel ensemble évite donc tout raccordement ou branchement à l'extérieur.

Grâce à une telle conception et à l'utilisation d'un clapet flexible disposé à l'intérieur d'une chambre ouverte et ce, de telle sorte que les bords libres dudit clapet viennent s'appuyer contre les parois de la chambre latérale avec un minimum d'échappement d'air latéral, il est possible d'éviter les déclenchements intempestifs de l'alarme dus aux vibrations ou secousses produites en fonctionnement normal, et ce sans perturber l'opération de ramassage et, en cas de surpression permanente à l'intérieur du conduit de transmission, d'obtenir un pivotement suffisant par rapport à la fenêtre pour provoquer le déclenchement de l'alarme et jouer également le rôle d'élément de sécurité, étant donné qu'alors l'air propulsé à l'intérieur du conduit peut s'échapper vers l'extérieur.

Un tel ensemble de conception simple, particulièrement efficace, présente une grande fiabilité. De plus, un tel dispositif peut être contrôlé manuellement en déplaçant la lame, par exemple en prévoyant à sa surface supérieure une partie en relief permettant de la saisir, de manière à pouvoir amener le plot magnétique monté à l'extrémité de la lame en regard du contacteur disposé à l'intérieur de la chambre étanche, afin de contrôler le bon fonctionnement du sytème d'alarme.

## Revendications

1. Dispositif permettant de détecter le remplissage d'un réceptacle ou enceinte (4) dans une installation dans laquelle le transfert de matière depuis une zone de stockage jusqu'audit réceptacle, est réalisé au moyen d'un ensemble comprenant une turbine (2) permettant de prélever la matière sur la zone de stockage, et de la transférer dans le réceptacle (4) par soufflage (aspiration et/ou propulsion) à l'intérieur d'un conduit (3) reliant la sortie de ladite turbine à la partie supérieure de l'enceinte (4) de récupération, **caractérisé** en ce qu'il se présente sous la forme d'un bloc ou boitier (5) adaptable sur une paroi du circuit de transfert (3) de la matière, entre la sortie de la turbine (2) et le réceptacle ou enceinte (4) et ce, au dessus d'une fenêtre (6) ou ouverture réalisée sur ledit circuit (3), ledit bloc (5) comprenant d'une part, une chambre (7), ouverte vers l'extérieur, servant de cage à un volet obturateur flexible (8) maintenu normalement plaqué contre la fenêtre ou ouverture (6) et ce, de manière à l'obturer en formant une surface complémentaire de la surface interne du conduit de transfert (3) et sans aucune protubérance à l'intérieur dudit conduit, ledit volet (8) étant monté à l'intérieur de la chambre (7) de manière à pouvoir d'une part, fléchir à l'intérieur de ladite chambre lors des variations normales du flux d'air et de matière avec un minimum de fuites d'air à l'extérieur, et d'autre part, lors d'une surpression permanente à l'intérieur du conduit de transmission (3) produite par un bourrage accidentel ou un remplissage de l'enceinte de stockage (4), à pivoter automatiquement en s'écartant de la fenêtre (6) et, lors de ce déplacement, à provoquer le déclenchement d'une alarme sonore et/ou visuelle intégrée dans une chambre étanche (30) formant partie intégrante dudit bloc ou boitier (5).

2. Dispositif selon la revendication 1, caractérisé en ce que le volet obturateur flexible (8) est à base d'un matériau imputrescible résistant aux chocs, tel qu'une lame en élastomère.

3. Dispositif selon l'une des revendications 1 et 2, caractérisé en ce que le volet (ou lame) flexible (8) et la fenêtre correspondante (6) pratiquée dans le circuit de liaison (3), ont des forme correspondantes, la lame (8) étant fixée au boitier (5) le long de l'une de ses extrémités et ses autres bords libres venant tangenter avec les parois latérales de la cage ouverte (7) du boitier (5), qui se présentent sous la forme d'une surface courbe correspondant à la surface décrite par les bords libres du volet (8) lors de son fléchissement.

4. Dispositif selon la revendication 3, caractérisé en ce que la lame flexible (8) et la fenêtre correspondante (6) ont une forme trapézoïdale, la lame étant fixée au boitier (5) le long de la grande base de ce trapèze, trois autres bords libres (10,11,12) venant tangenter avec les parois latérales de la cage ouverte (7) du boitier (5), dont la paroi frontale (13) opposée à la ligne de flexion (9) de la lame (8), se présente sous la forme d'une surface courbe correspondant à la surface décrite par le bord libre (12) du volet (8) lors de son fléchissement.

5. Dispositif selon l'une des revendications 1 à 4, caractérisé en ce que les moyens d'alarme qu'il comporte sont constitués par un système de capteurs magnétiques comprenant un plot magnétique (14) monté à l'extrémité de la lame flexible, et un contacteur magnétique (15) disposé à l'intérieur de la chambre étanche (30), et qui permet de déclencher un système d'alarme (18) dont les moyens d'alimentation sont également disposés à l'intérieur de la chambre étanche du boitier.

6. Dispositif selon la revendication 5, caractérisé en ce que la lame flexible (8) présente à sa surface supérieure des moyens (parties en relief) permettant de la saisir de manière à pouvoir amener le plot magnétique (8) monté à l'extrémité de la lame en regard du contacteur (15) disposé à l'intérieur de la chambre étanche et ce, afin de contrôler le bon fonctionnement du système d'alarme.

## Patentansprüche

1. Einrichtung zur Erfassung der Füllung eines Behälters oder Speicherraums (4) in einer Anlage, in der das Zuführen von Material aus einem Speicherbereich zu diesem Behälter mit Hilfe einer Einheit realisiert ist, die eine Turbine (2) umfaßt, die es gestattet, das besagte Material aus dem Speicherbereich zu entnehmen und es durch Blasen (Ansaugen und/oder Antreiben) im Innern einer Leitung (3) in den Behälter (4) zu überführen, wobei die Leitung den Ausgang der besagten Turbine mit dem oberen Bereich des Auffangbehälters (4) verbunden ist, **dadurch gekennzeichnet,** daß die Einrichtung aus einem Kasten oder Gehäuse (5) besteht, der oder das auf einer Wand der Überführungsleitung (3) des Materials zwischen dem Ausgang der Turbine (2) und dem Behälter oder dem Speicherraum (4) oberhalb eines Fensters (6) oder einer Öffnung angeordnet ist, die auf dieser Leitung (3) vorgesehen ist, wobei der Kasten (5) einerseits eine nach außen offene Kammer (7) aufweist, die als Behältnis für eine biegsame Verschlußklappe (8) dient, die normalerweise gegen das Fenster oder die Öffnung (6) gehalten wird, wobei sie in einer verschließenden Weise eine komplementäre Oberfläche zu der inneren Oberfläche der Überführungsleitung (3) bildet, ohne daß ein Element nach innen in die Überführungsleitung hineinragt, wobei die besagte Klappe (8) im Innern der Kammer (7) angeordnet ist, um sich einerseits bei normalen Luftfluß-und Materialflußschwankungen in das Innere der besagten Kammer zu erstrekken, wobei ein Minimum an entweichender Luft nach außen auftritt, und um sich andererseits bei einem andauernden Überdruck im Innern der Überführungsleitung (3), der durch einen versehentlichen Stau oder eine Füllung der Speichereinfassung (4) hervorgerufen wird, automatisch zu verschwenken und um sich dabei von dem Fenster zu entfernen sowie bei dieser Bewegung einen akustischen oder visuellen Alarm auszulösen, der in einer abgeschlossenen Kammer (30) integriert ist, die in dem Kasten oder Gehäuse (5) angeordnet und mit diesem verbunden ist.

2. Einrichtung nach Anspruch 1, dadurch gekennzeichnet, daß die biegsame Verschlußklappe (8) aus einem nicht-faulenden, stoßunempfindlichen Material, wie ein Blatt aus einem Elastomer, besteht.

3. Einrichtung nach Anspruch 1 oder Anspruch 2, dadurch gekennzeichnet, daß die biegsame Klappe (oder Blatt) (8) und das zugehörige in der Verbindungsleitung (3) angeordnete Fenster (6) über sich entsprechende Formen verfügen, wobei das Blatt (8) an dem Kasten (5) entlang von einer seiner Seiten befestigt ist und die anderen freien Ränder mit den entsprechenden seitlichen Wänden des offenen Behältnisses (7) des Kastens (5) in berührender Verbindung stehen, die die Gestalt einer gekrümmten Oberfläche aufweisen, die der durch die freien Ränder der Klappe (8) während ihrer Verbiegung beschriebenen Oberfläche entsprechen.

4. Einrichtung nach Anspruch 3, dadurch gekennzeichnet, daß das biegsame Blatt (8) und das zugehörige Fenster (6) eine trapezoidale Form aufweisen und daß das Blatt an dem Kasten (5) an der längeren Grundkante dieses Trapezes befestigt ist und die drei anderen freien Kanten (10, 11, 12) in berührender Verbindung mit den seitlichen Wänden des offenen Behältnisses (7) des Kastens (5) stehen, dessen der Knicklinie (9) des Blattes (8) gegenüberliegende Vorderwand (13) die Gestalt einer gekrümmten Oberfläche aufweist, die der Oberfläche entspricht, die von der freien Seite (12) der Klappe (8) während ihrer Verbiegung beschrieben wird.

5. Einrichtung nach einem der Ansprüche 1 bis 4, dadurch gekennzeichnet, daß die Alarm gebenden Mittel, die der Einrichtung zugeordnet sind, aus einem System von magnetischen Erfassungsmitteln aufgebaut sind, die einen magnetischen Fühler (14), der am Ende des biegsamen Blattes angeordnet ist, und einen magnetischen Kontaktgeber (15) umfassen, der im Innern der dichten Kammer (30) angeordnet ist, und der es gestattet, ein Alarmsystem (18) auszulösen, dessen Stromversorgungsmittel ebenfalls im Innern der dichten Kammer des Kastens angeordnet sind.

6. Einrichtung nach Anspruch 5, dadurch gekennzeichnet, daß das biegsame Blatt (8) an seiner oberen Oberfläche über Mittel (reliefartige Abschnitte) verfügt, der ihr Ergreifen gestatten, um den magnetischen Fühler (8), der am Ende des biegsamen Blattes angeordnet ist, in Gegenüberstellung mit dem Kontaktgeber (15) zu überführen, der im Inneren der dichten Kammer vorgesehen ist, um das einwandfreie Arbeiten des Alarmsystems zu kontrollieren.

## Claims

1. A device allowing the filling of a receptacle or container (4) to be detected in an installation wherein the transfer of matter from a storage zone as far as the said receptacle is obtained by means of a unit comprising a fan (2) making it possible to take up the matter from the storage zone and to transfer it into the receptacle (4) by blowing (aspiration and/or propulsion) inside a duct (3) connecting the outlet of the said fan to the upper portion of the recovery container (4), characterized in that it takes the form of a block or box (5) fittable on the wall of the circuit (3) for transferring the matter, between the outlet of the fan (2) and the receptacle or container (4) and this above a window (6) or opening made on the said circuit (3), the said block (5) comprising, on the one hand, a chamber (7) open towards the outside serving as a cage for a flexible obturating shutter (8) normally kept laid against the window or opening (6), and this, so as to obturate it by forming a surface complementary to the internal surface of the transfer duct (3) and without any protuberance inside the said duct, the said shutter (8) being mounted inside the chamber (7) so as to be capable, on the one hand, of bending inside the said chamber during normal variations of the flow of air and of matter with a minimum of air leaks to the outside, and on the other hand, of pivoting automatically, during a permanent excess pressure inside the transmission duct (3) produced by an accidental choking or filling of the storage container (4), by moving away from the window (8) and of producing during this displacement the setting off of a sound and/or visual alarm integrated into a leakproof chamber (30) forming an integral part of the said block or box (5).

2. A device according to claim 1, characterized in that the flexible obturating schutter (8) is made of a shock-resistant rot-proof material, such as an elastomeric strip.

3. A device according to one of claims 1 and 2, characterized in that the flexible shutter (or strip) (8) and the corresponding window (6) cut out in the connecting circuit (3) have corresponding shapes, the strip (8) being fixed to the box (5) along one of its ends and its other free edges coming into tangential contact with the side walls of the open cage (7) of the box (5) which take the shape of a curved surface corresponding to the surface described by the free edges of the shutter (8) during its flexure.

4. A device according to claim 3, characterized in that the flexible strip (8) and the corresponding window (6) have a trapezoidal shape, the strip being fixed to the box (5) along the large base of this trapezium, three other free edges (10, 11, 12) coming into tangential contact with the side walls of the open cage (7) of the box (5), whose front wall (13) on the opposite side to the line of flexure (9) of the strip (8) takes the shape of a curved surface corresponding to the surface described by the free edge (12) of the shutter (8) during its flexure.

5. A device according to one of claims 1 to 4, characterized in that the alarm means which it contains are constituted by a system of magnetic sensors comprising a magnetic post (14) mounted at the end of the flexible strip, and a magnetic contactor (15) disposed inside the leakproof chamber (30) and which allows an alarm system (18) to be set off whose power supply means are also disposed inside the leakproof chamber of the box.

6. A device according to claim 5, characterized in that the flexible strip (8) has at its top surface, means (parts in relief) making it possible to grip it, so as to allow the magnetic post (8) mounted at the end of the strip to be brought opposite the contactor (15) disposed inside the leakproof chamber, and this in order to check the proper functioning of the alarm system.
